# EUROPEAN PATENT APPLICATION

(11) **EP 4 206 542 A2**
(43) Date of publication of application: **05.07.2023**
(21) Application number: 22215227.4
(22) Date of filing: 20.12.2022
(51) Int. Cl.: F24C 7/08, F24C 15/34

(54) **COOKING APPLIANCE COMPRISING AN INSULATION BLOCK MADE FROM GLASS OR CERAMIC FOAM FOR OVEN CAMERA INSULATION**

(30) Priority: 29.12.2021 US 202163294637 P; 19.12.2022 US 202218084169
(71) Applicant: Whirlpool Corporation, Benton Harbor, MI 49022 (US)
(72) Inventor: Basso, Margherita, 21024 Cassinetta di Biandronno (VA) (IT); Distaso, Luca, 21024 Cassinetta di Biandronno (VA) (IT); Sacchi, Daniele, 21024 Cassinetta di Biandronno (VA) (IT)
(74) Representative: Spina, Alessandro

(57) **Abstract**

A cooking appliance (100) includes a housing (104) having walls (106, 108, 110, 112) defining an oven cavity (102), at least one wall (106) defining an opening (210) to view into the oven cavity (102) from an outer side of the housing (104), a camera (206) arranged on the outer side and being positioned such that a lens (207) of the camera has a visibility area through the opening (210), and an insulation block (202) having a foamed glass or ceramic body. The insulation block (202) is positioned between the opening (210) and the camera (206), and defines a channel (204) within the foamed body corresponding to the visibility area of the lens (207) extending from the camera (206) to the opening (210).

## Description

### BACKGROUND

### FIELD OF DISCLOSURE

The present disclosure relates to foam insulation blocks for oven camera insulation.

### DESCRIPTION OF RELATED ART

Ovens are kitchen appliances that are used to cook food. Such appliances often include cameras to capture images of the inside of the appliance during cooking. However, these cameras are often exposed to high temperatures and need to be protected from exposure to these high temperatures. For example, in some ovens, high temperatures are used to provide pyrolytic cleaning (e.g., an approach in which an oven temperature of 420 to 500 degrees Celsius is used).

### SUMMARY

According to one more embodiments, a cooking appliance includes a housing having walls defining an oven cavity, at least one wall defining a window to view into the oven cavity from an outer side of the housing, a camera arranged on the outer side and being positioned such that a lens of the camera has a visibility area through the window, and an insulation block having a foamed glass body. The insulation block is positioned between the housing and the camera, and defines a channel within the foamed glass body corresponding to the visibility area of the lens extending from the camera to the window.

According to one or more embodiments, the insulation block may have a K-coefficient of 100 to 140 mW/mK. In at least one embodiment, the cooking appliance may include a sink washer positioned around the lens between the insulation block and the lens to cool the lens via forced air from an oven cooling system. In certain embodiments, the sink washer may be aluminum. In certain further embodiments, the cooking appliance may further include an air gap defined between the insulation block and sink washer to reduce surface contact therebetween. In at least one embodiment, the cooking appliance may further include an oven wrapper forming the walls inside an oven frame, the oven frame and the oven wrapper defining an oven channel therebetween, and the camera and insulation block may be arranged within the oven channel. In at least a further embodiment, the camera may be mounted to the oven frame via a camera mounting bracket separating the camera from other components of the cooking appliance. In one or more embodiments, the channel may have a larger diameter toward the window than at the camera. In at least one embodiment, the window may include a view port glass at least partially enclosed by the insulation block. In one or more embodiments, the insulation block may overlay a portion of an inner surface of a view port glass provided at the window.

According to one or more embodiments, a cooking appliance includes a housing having walls defining an oven cavity, at least one wall defining a window to view into the oven cavity from an outer side of the housing, a camera arranged on the outer side and being positioned such that a lens of the camera has a visibility area through the window, and an insulation block having a ceramic body. The insulation block is positioned between the housing and the camera, and defines a channel within the ceramic body corresponding to the visibility area of the lens extending from the camera to the window.

According to one or more embodiments, the cooking appliance may further include a sink washer positioned around the lens between the insulation block and the lens to cool the lens via forced air from an oven cooling system. In at least one embodiment, the cooking appliance may further include an oven wrapper forming the walls inside an oven frame, the oven frame and the oven wrapper defining an oven channel therebetween, and the camera and insulation block may be arranged within the oven channel. In one or more embodiments, the channel may have a larger diameter toward the window than at the camera.

According to one or more embodiments, a method of forming an insulation block for a cooking appliance includes mixing raw materials of glass or ceramic powders and alkaline or aqueous solution to form an activated suspension, foaming the activated the suspension via mechanical stirring, curing after foaming to form a foamed gelified suspension, and firing the gelified foam suspension to form a glass or ceramic foam structure.

According to at least one embodiment, the method may further include placing the glass foam structure between a camera and an oven cavity, such that a channel defined in the glass foam structure corresponds to an opening in a wall of the oven cavity and to a view field of the camera to allow the camera to view into the oven cavity. In at least one embodiment, the method may further include layering a glass or ceramic foam structure to form a laminated block. In at least a further embodiment, the laminated block may be a laminate of ceramic foam structure layers that are processed to form holes and channels in the ceramic foam structure layers. In at least one embodiment, after the curing, the foamed gelified suspension may have a desired body shape, and is removed from a mold prior to firing. In at least some further embodiments, the mold may form a channel defined in the desired body shape.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompanying drawings in which:
FIG. 1 illustrates an example front perspective view of an oven including a camera assembly;
FIG. 2 illustrates a cross-sectional view of the camera assembly having an insulation block; and
FIG. 3 illustrates an example process for the formation of the insulation block of FIG. 2.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Except in the examples, or where otherwise expressly indicated, all numerical quantities in this description indicating amounts of material or conditions of reaction and/or use are to be understood as modified by the word "about" in describing the broadest scope of the invention. The term "substantially," "generally," or "about" may be used herein and may modify a value or relative characteristic disclosed or claimed. In such instances, "substantially," "generally," or "about" may signify that the value or relative characteristic it modifies is within ± 0%, 0.1%, 0.5%, 1%, 2%, 3%, 4%, 5% or 10% of the value or relative characteristic. Practice within the numerical limits stated is generally preferred.

It should also be appreciated that integer ranges (e.g., for measurements or dimensions) explicitly include all intervening integers. For example, the integer range 1-10 explicitly includes 1, 2, 3, 4, 5, 6, 7, 8, 9, and 10. Similarly, the range 1 to 100 includes 1, 2, 3, 4, ... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. In the specific examples set forth herein, concentrations, temperature, and reaction conditions (e.g. pressure, pH, flow rates etc.) can be practiced with plus or minus 50 percent of the values indicated rounded to three significant figures. In a refinement, concentrations, temperature, and reaction conditions (e.g., pressure, pH, flow rates, etc.) can be practiced with plus or minus 30 percent of the values indicated rounded to three significant figures of the value provided in the examples. In another refinement, concentrations, temperature, and reaction conditions (e.g., pressure, pH, flow rates, etc.) can be practiced with plus or minus 10 percent of the values indicated rounded to three significant figures of the value provided in the examples.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

It must also be noted that, as used in the specification and the appended aspects, the singular form "a," "an," and "the" comprise plural referents unless the context clearly indicates otherwise. For example, reference to a component in the singular is intended to comprise a plurality of components.

According to one or more embodiments, an oven may include a camera for observing the contents of the oven cavity. For example, the camera may be used to show images of the contents of the oven to a user at a display located external to the oven cavity. Or, in certain examples, the camera may be used to capture images that are analyzed to determine the doneness level of food in the oven. The oven may include a viewport glass integrated into the oven cavity in front of the camera to facilitate the field of view of the camera from outside the oven cavity, while providing a barrier between the oven cavity (i.e., the heat from the cavity) to the camera.

Given the environment of the oven cavity, heat from the oven cavity may be a concern for the camera. Conventional insulation materials typically used for cooking include rock wool, glass wool, or general materials based on refractory fibers. However, some of these materials are less than desirable for various reasons. For example, rock wool and glass wools may only be bent and pushed toward the oven walls while offering limited protection of areas where other components are within the volume around them. Thus, insulation materials with improved performance at high temperatures, especially in appliances with reduced-wall thickness designs, are desired. Further, the application of insulation materials around electronic components, such as a camera, is important, especially given that cameras can be one of the more thermo-sensitive components necessitating protection from heat.

According to one or more embodiments, an oven includes a foam insulation block. The foam insulation block is positioned between the camera and the view power glass, surrounding the view field of the camera to the view port glass in order to thermally insulate the camera from heat leakage from the oven. The foam block can be fired during formation to form the glass foam structure. This may result in a K-coefficient performance of around 100-140mW/mK, and the resultant material will have the possibility to be formed with a desired shape or be constructured to be processed (e.g., drilled and cut), allowing for flexible manufacturing processes and end-shape of the block component.

In certain embodiments, the insulation block may be manufactured using a mold, such as a silicon mold, or any other mold having a resistance (i.e., being able to structurally withstand) up to 75 degrees Celsius. The insulation block of at least one embodiment of the present disclosure may be shaped with holes, such that there will not be a need for subtractive processes. The insulation block may be positioned between an oven cavity housing and the oven camera and define a channel therein for the view field corresponding to the visibility area of the lens form the camera to the viewport glass.

According to various embodiments, the camera may allow for visibility into the oven cavity. In certain embodiments, the camera may be positioned at the top surface of the oven, with a view port glass forming a portion of the oven wall to allow viewing therethrough. The insulation block of the present disclosure is positioned in contact with the top surface of the wall of the cavity and configured to lower the temperature of the area and air that surrounds and contacts the camera. The insulation block defines the channel corresponding to the view field of the camera, and on one side of the channel is the view port glass, and on the other side of the channel is a lens barrel at the camera. A sink washer may be arranged at the barrel lens to further maximize the surface in contact with the forced air of the standard cooling system of the oven. The washer sink is configured to cool down the lens barrel and camera assembly. A camera bracket may also be included to close off the camera assembly from other oven components.

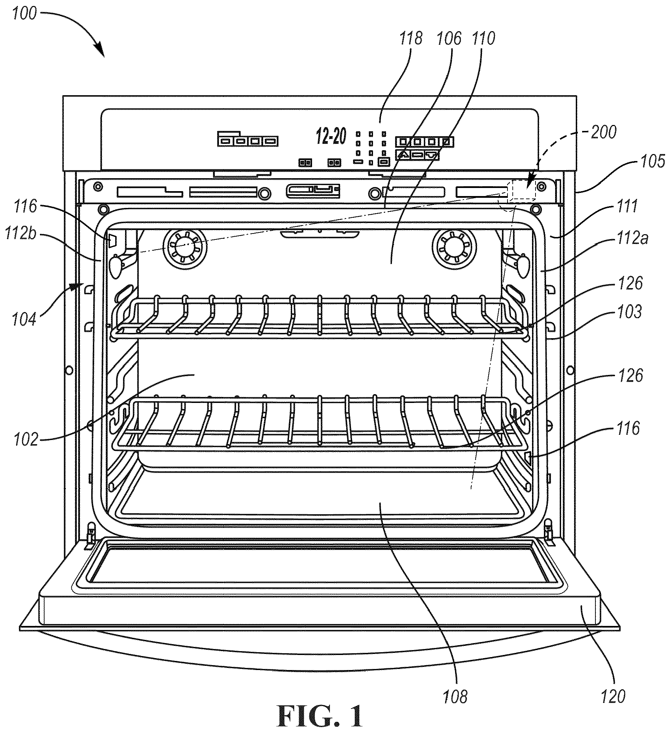

Referring to FIG. 1, an example front perspective view of an oven 100 is shown. The oven 100 may be one of various cooking appliances, such as a conventional oven, a convection oven, a conduction oven, a microwave oven, a toaster oven. In some examples, the oven 100 may be a function-specific oven, such as a roaster oven, a pizza oven, etc. The oven 100 may be standalone in some cases, while in other cases the oven may be built-in or a component of a combination oven and stove top.

The oven 100 may form a cabinet 104 and a cavity wrapper 103 defining an access opening and the walls of a cavity 102. The cavity 102 may be defined by a cavity top wall 106, cavity bottom wall 108, cavity back wall 110, and side walls 112. An oven frame 105 may be arranged around the cavity wrapper 103, defining an oven channel 111 between the oven cavity 103 and the oven frame 105.

A door assembly 120 may be hinged at a front of the cavity bottom 108 to permit access to the cavity 102. The door assembly 120 may include a door with a window and a handle and may hermetically seal the cavity when the door is in a closed position. It should be noted that this is an example, and ovens 100 with different types of doors may be used. For instance, a door assembly 120 may be hinged at a side wall 112 instead of the bottom wall 108. A door sensor may be arranged on the door assembly 120 or the cavity 102 to detect an open and closed position of the door of the door assembly 120.

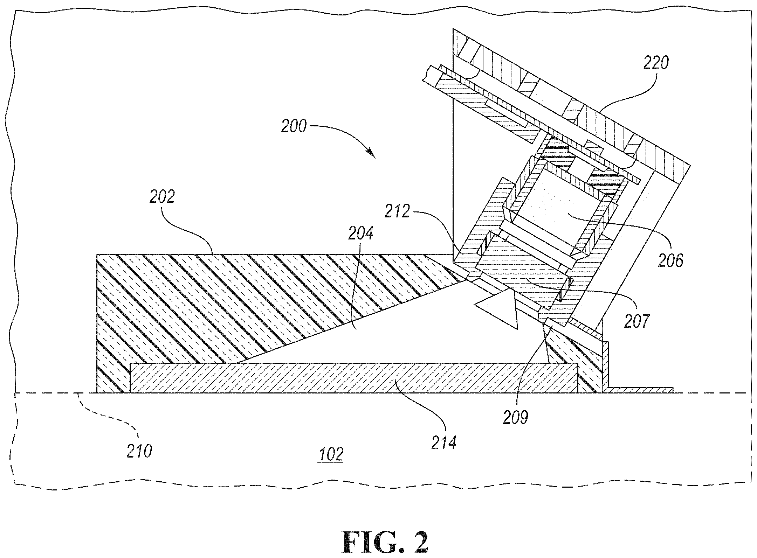

The cavity 102 may be configured to receive food items for cooking, baking, and/or broiling during a cooking cycle. A camera assembly 200 may be arranged within the channel 111 and be configured to capture images of the contents of the cavity 102 via an opening in the cavity wrapper 103 that allows the view field of the camera assembly 200 to extend into the cavity 102. Further detail of the camera assembly 200 will be discussed with reference to FIG. 2 below. The cavity 102 may also include temperature sensors 116 for determining the air temperature within the cavity 102 during cooking. The oven 100 may further include a user interface 118 configured to receive user input with respect to cycles or other oven operation, as well as images captured by the camera, or instruction based on images captured by the camera. The user interface 118 may also provide information to the user such as cook time, temperature, etc.

The oven 100 may include a heating system 122 for heating the cavity 102 during cooking. The heating system 122 may include one or more heating elements, such as a gas heating element or an electric heating element. In one example, the heating system 122 may include a first heating element at the bottom of the cavity 102, and a second heating element at the top of the cavity 102. In yet a further example, heating elements may be arranged between the cabinet 104 and the cavity back 110 and/or the cavity top 106. The oven 100 may include one or more racks 126 within the cavity 102 for supporting the food items during cooking. As shown by way of example in FIG. 1, the oven includes top and bottom rack 126, ovens 100 with more or fewer racks 126 are possible.

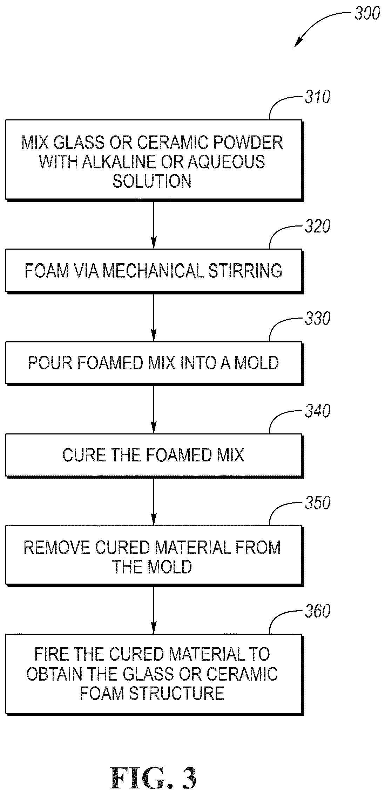

Referring to FIG. 2, a cross-sectional view of the camera assembly 200 for an oven 100 having an insulation block 202 is shown. The camera assembly 200 may be similar to the camera assembly described with respect to FIG. 1, with further detail provided herein. The insulation block 202 may define an aperture or channel 204 configured to allow a view path for a camera 206 of the camera assembly 200, corresponding to the view field of the camera 206. The channel 204 may be formed through the insulation block 202 at an angle and extend from the camera 206 to an opening 210 in the top wall 106 of the cavity wrapper 103 to allow the camera 206 to view in the oven cavity 102. The channel 204 may be an aperture that is wide enough to accommodate the view field of the camera 206. In the example shown in FIG. 2, the channel 204 has a non-uniform diameter with the channel increasing in width as the channel 206 approaches the opening 210 in the top wall 106. The insulation block 202 may be a glass foam block, formed from a gelified foam, described in further detail with reference to FIG. 3.

The camera 206 may include a barrel lens 207, that may open into the channel 204. A sink washer 212 may be arranged at the barrel lens of the camera 206. The barrel lens may further maximize the surface in contact with a forced air of the standard cooling system (not shown) of the oven 100. The sink washer 212 is configured to cool down the lens barrel and camera assembly and may be made of aluminum. Other low-conductive materials may be used as well in order to function as a heat sink to prevent heat conduction to the barrel lens 207 of the camera 206. The sink washer 212 may be positioned between and provide a gap between the insulation block 202 and the camera 206 to reduce surface contact of the camera 206 with the insulation block 202. In some embodiments, air gaps 209 may be formed within the insulation block 202 or formed between the sink washer 212 and the insulation block 202 to further improve insulation between components of the camera assembly 200. The air gaps 209 may allow for further circulation of cooling air to the sink washer 212 (i.e., via a standard oven cooling system of the oven 100 and cooling air flow through the oven channel between the cavity wrapper 103 and frame 105).

A view port glass 214 may be arranged in front of the camera 206 at the opening 210 and be infrared double coded. The view port glass 214 may be positioned within the opening 210 of the top wall 106 in the embodiment shown in FIG. 2, or may be in any suitable wall based on the arrangement of the camera assembly 200 in the oven 100. The view port glass 214 may be sized based on the opening 210 or based on the channel 204 such that the camera 206 has a proper viewing field into the cavity 102. The view port glass 214 may be positioned such that tat least a portion of the view port glass 214 is enclosed by the insulation block 202. In certain embodiments, as shown in FIG. 2, the insulation block 202 may overlay a portion of the inner surface of the view port glass 214. The view port glass 214 may be configured to protect the image sensor of the camera from heat or residue from the cavity 102 but also pass light waves from the cavity 102 to the image sensor. A camera bracket 220 may close off the camera assembly from other components of the oven 100, as well as mount the camera bracket 220 to the frame 105 of the oven 100, or other suitable securing structure of the oven 100.

While the camera assembly 200 is shown and discussed herein as being arranged at the cavity top 106, the camera assembly 200 may be arranged at other portions of the oven perimeter, such as the cavity side walls 112 and even the cavity back 110 and/or bottom 108. More than one camera assembly and insulation block may be included to view various angles of the cavity 102. Thus, the depiction of a particular location of the camera assembly 200, and discussion of one camera assembly, is not intended to be limiting.

With reference to FIG. 3, an example of a process 300 for the formation of the insulation block of FIG. 2 is illustrated. The insulation block 202 may be composed of a glass or ceramic foam structure, using glass or ceramic powder activated via alkaline or aqueous solutions as raw material. The raw material powder may come from "virgin" material (e.g., glass produced from pure sands as raw material for glass foam) and/or from recycled materials, machined to get to the proper powder size.

The foam structure may be produced via any suitable process, including for example, the following process depicted in FIG. 3. At step 310, raw materials of glass or ceramic powder is mixed with alkaline or aqueous solution to form an activated suspension. At step 320, the activated suspension is foamed via mechanical stirring. The settings of the mechanical stirring may be any suitable setting to foam the mixture, and may be in some embodiments, high speed stirring. At step 330, the foamed mix is poured in a mold, built with the shape of the final component we want to get, including any including prebuilt holes. At step 340, the mold is cured in a post-foaming curing step. At 350, the cured material is removed from the mold. The cured material is then fired after removal of the cured material from the mold at step 360 to obtain the glass or ceramic foam structure. At the end of the process, the obtained material is a glass or ceramic foam block suitable for use in an oven as insulation block 202.

In at least one embodiment, the insulation block 202 may be a ceramic foams blocks, and in further embodiments, may be a laminated ceramic foam block. The ceramic foam block may be obtained by adhering (e.g., gluing or otherwise securing) several layers of ceramic foam, on which channels and holes are made through machining. The layers may be composed of alternated materials, in order to allow the use of high performance materials with very low K-factors, that would be too brittle if used in a unitary block, and result in lower performance when adding mechanical stress to the structure. An example of these materials may be a laminate based on muscovite mica paper and high temperature silicone resin, like commercially available ORVIM 450/800.

In other embodiments, the insulation block 202 may be composed of calcium silicate. Calcium silicate may be available in panel form, and may require post processing to achieve the final shape, including formation of the channel 204 within the block 202. With respect to its thermal performances, calcium silicate may have a K-factor of around 300-380 mW/mK.

As another option, the insulation block 202 may also be composed of foam glass insulation panels. As calcium silicate, this material may be available in panel form and may require hard machining. The foam glass insulation may have a lower K-factor, around 30-70 mW/mK, but may have a lower mechanical resistance compared to the other materials. Glass foams may also be used, as their insulation performances may be similar to rock and glass wools, while having higher safety and some limited flexibility. The glass foams may be cut and formed from panels through drilling and more. Commercially available materials, such as FOAMGLAS, may be one example material. Another example option is a polyurethane foam. Some foams may be resistant up to 90-100 degrees Celsius if used continuously, and up to 250 degrees Celsius for short periods of time. Thus, such polyurethane foams may have applications in cooking appliances having very high temperature ranges, such as pyro ovens. Aerogel may be used as a low density solid and an effective thermal insulator. Aerogel may include three-dimensional, intertwined clusters that comprise 3% of the volume. Some commercially available products include those sold as PYROGEL from APSEN, and are able to reach very thin wall thicknesses while maintaining high insulation performances and thermal resistance.

As such, according to one or more embodiments, an insulation block is provided between the camera assembly and view port glass of an oven, such that the insulation block provides a channel corresponding to the view field of the camera to allow the camera to capture images inside the oven cavity. The camera assembly may include other features (e.g., air gaps and sink washers) to thermally protect the camera. The insulation block may be a gelified foam, that is cured prior to and post foaming, that allows the foam to be gel-cast and form a foam having a K-coefficient of 100-140 mW/mK.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A cooking appliance (100) comprising:
a housing (104) having walls (106, 108, 110, 112) defining an oven cavity (102), at least one wall (106) defining an opening (210) to view into the oven cavity (102) from an outer side of the housing (104);
a camera (206) arranged on the outer side and being positioned such that a lens (207) of the camera (206) has a visibility area through the opening (210); and
an insulation block (202) having a glass or ceramic foamed body, the insulation block (202) positioned between the housing (104) and the camera (206), and defining a channel (204) within the foamed body corresponding to the visibility area of the lens (207) extending from the camera (206) to the opening (210).

2. The cooking appliance (100) of claim 1, wherein the insulation block (202) has a K-coefficient of 100 to 140 mW/mK.

3. The cooking appliance (100) of any of the preceding claims, further comprising a sink washer (212) positioned around the lens (207) between the insulation block (202) and the lens (207) to cool the lens (207) via forced air from an oven cooling system.

4. The cooking appliance (100) of claim 3, wherein the sink washer (212) is aluminum.

5. The cooking appliance (100) of claim 3, further comprising an air gap (209) defined between the insulation block (202) and the sink washer (212) to reduce surface contact therebetween.

6. The cooking appliance (100) of any of the preceding claims, further comprising an oven wrapper (103) forming the walls (106, 108, 110, 112) inside an oven frame (105), the oven frame (105) and the oven wrapper (103) defining an oven channel (111) therebetween, and the camera (206) and insulation block (202) are arranged within the oven channel (111).

7. The cooking appliance (100) of claim 6, wherein the camera (206) is mounted to the oven frame (105) via a camera mounting bracket (220) separating the camera (206) from other components of the cooking appliance (100).

8. The cooking appliance (100) of any of the preceding claims, wherein the channel (204) has a larger diameter toward the opening (210) than at the camera (206).

9. The cooking appliance (100) of any of the preceding claims, wherein the opening (210) includes a view port glass (214) at least partially enclosed by the insulation block (202).

10. The cooking appliance (100) of any of the preceding claims, wherein the insulation block (202) overlays a portion of an inner surface of a view port glass (214) provided at the opening (210).

11. A method (300) of forming an insulation block (202) for a cooking appliance (100), comprising:
mixing raw materials of glass or ceramic powders and alkaline or aqueous solution to form an activated suspension;
foaming the activated the suspension via mechanical stirring;
curing after foaming to form a foamed gelified suspension; and
firing the gelified foam suspension to form a glass or ceramic foam structure.

12. The method (300) of claim 11, further comprising placing the glass or ceramic foam structure between a camera (206) and an oven cavity (102), such that a channel (204) defined in the glass foam structure corresponds to an opening (210) in a wall (106) to the oven cavity (102) and to a view field of the camera (206) to allow the camera (206) to view into the oven cavity (102).

13. The method (300) of claims 11 or 12, further comprising layering a glass or ceramic foam structure to form a laminated block (202).

14. The method (300) of claim 13, wherein the laminated block (202) is a laminate of ceramic foam structure layers that are processed to form holes and channels in the ceramic foam structure layers.

15. The method (300) of any of claims 11 to 14, wherein after the curing, the foamed gelified suspension has a desired body shape, and is removed from a mold that forms a channel defined in the desired body shape prior to firing.
